# EUROPEAN PATENT APPLICATION

(11) **EP 4 748 560 A1**
(43) Date of publication of application: **27.05.2026**
(21) Application number: 24214159.6
(22) Date of filing: 20.11.2024
(51) Int. Cl.: B29C 70/54, B29D 99/00, B29L 31/08

(54) **DEVICE AND SYSTEM FOR TRIMMING A LONGITUDINAL EDGE OF A HALF SHELL**

(71) Applicant: Nordex Blade Technology Centre ApS, 5771 Stenstrup (DK)
(72) Inventor: Soerensen, Flemming, 5771 Stenstrup (DK)
(74) Representative: Völkl Siebenson Patentanwälte - Partnerschaft mbB

(57) **Abstract**

The invention concerns a device (200) for trimming a longitudinal edge (138) of a half shell (134) in a root region (114) of a wind turbine rotor blade (110), the half shell (134) being placed in a mould (140), the device (200) comprising
- a holding frame (202), the holding frame (202) having a rail (206), a first support means (212) and a second support means (214), and
- a trimming tool (208) which is displaceably guided on the rail (206) of the holding frame (202),
wherein
- the holding frame (202) is designed in such a way that it extends over the longitudinal edge (138) for trimming,
- the first support means (212) is designed to support the holding frame (202) outside the half shell (134) on the mould (140), and
- the second support means (214) is designed to support the holding frame (202) on the half shell (134) inside the mould (140) .

The invention also concerns a system (300).

## Description

The invention concerns a device for trimming a longitudinal edge of a half shell in a root region of a wind turbine rotor blade. The invention also relates to a system for trimming a longitudinal edge of a half shell in a root region of a wind turbine rotor blade.

Wind turbines with wind turbine rotor blades are widely known from the state of the art and are used to convert wind energy into electrical energy. Wind turbine rotor blades are usually manufactured in a shell design and comprise several components made of fiber reinforced laminate, like the aerodynamic shell. Typically, in a first step half shells are produced from many layers of a fiber composite material, into which load bearing structures such as spar caps are integrated. In a second step, after infusing the laminate layers with resin by means of a vacuum infusion process and curing the half shells in moulds, the produced half shells are placed on top of each other and bonded together along bonding lines for producing the wind turbine rotor blade. The half shells and thus the finally produced wind turbine rotor blade may be segmented for manufacturing a so-called split or segmented wind turbine rotor blade.

The half shells are bonded together along their longitudinal edges. In order to achieve a high bonding quality for a reliable connection between the two half shells it is necessary to remove any excess material remaining on the longitudinal edges after the manufacturing of the half shells. Additionally, the longitudinal edges have to be adapted in the height to the edges of the mould and to be flattened. Therefore, these longitudinal edges are trimmed, resulting in particularly precise bonding surfaces.
One task underlying the invention is to provide a device which contributes to a reliable and efficient trimming process.

This object is solved by the independent claim. Advantageous embodiments are given in the sub-claims.

According to a first aspect, a device for trimming a longitudinal edge of a half shell in a root region of a wind turbine rotor blade is disclosed, the half shell being placed in a mould. The device comprises a holding frame. The holding frame has a rail, a first support means and a second support means. The device comprises a trimming tool which is displaceably guided on the rail of the holding frame. The holding frame is designed in such a way that it extends over the longitudinal edge for trimming. The first support means is designed to support the holding frame outside the half shell on the mould. The second support means is designed to support the holding frame on the half shell inside the mould.

The described device is provided for trimming the longitudinal edges in the root region of a half shell, when the half-shell is manufactured in a mould and cured therein. At least parts of the longitudinal edges provide the bonding flanges for bonding the two half shells. With the device, each of the longitudinal edges can be trimmed to a defined bonding flange height. The half shell has two opposing longitudinal edges, each edge running from the root end to the tip end of the half shell. At this longitudinal edges, two corresponding half shells are bonded together as indicated above. As main characteristics of the invention, the device has a holding frame, which is, in an intended operational state, supported - on the one hand - on the mould itself and - on the other hand - on the half-shell. The device therefore is designed for trimming only one of the two longitudinal edges. The holding frame only spans or covers one of the two longitudinal edges, and not both longitudinal edges, with regard to the chordwise direction of a half shell. In other words, the holding frame does not extend over the whole half shell. Thus, in a general perspective, the holding frame is designed to cover a half of the half shell. For example, the holding frame extends from a bottom (valley bottom) in the half shell over one longitudinal edge towards a support surface on the mould or outside the mould.

In particular in solutions, in which a device spans both longitudinal edges of the half shell, the trimming tool - for space reasons - would be located on the inside of the mould and thus inside the half shell. However, a worker typically would operate the trimming tool, e.g. a saw tool, from outside the mould. Thus, the worker typically faces a dangerous zone of the trimming tool like the saw blade. With the described inventive solution, a worker can stand within the half shell and thus facing away from a dangerous zone of the trimming tool, e.g. on the back of the saw blade. Further, the disclosed device offers flexibility in use, as, for example, it can be used on half shells with different diameters. This is due to the fact that the device is not configured to span the whole diameter of a half shell, i.e. both opposing longitudinal edges, and is therefore suitable for a wide range of half shells with different dimensions. This contributes to a high level of occupational safety (providing high level for health, safety and environment at work; short: HSE).

The trimming tool is, for example, a circular saw, a milling head or a grinding tool.

The first support means a single support element or several support elements. This is also true for the second support means.

The term mould does not only mean the structure that actually gives the shape for the to-be-manufactured half-shell, but can also include any support structure, e.g. a sub-structure, for carrying the mould. Such support structure may be a separate component being fixed to the shape-giving structure of the mould.

According to an embodiment, the first support means and/or the second support means comprises one or more support legs, which one or more support legs are arranged on the holding frame or are an integral part of the holding frame. For example, the support legs can be pivotably connected to the holding frame. With the support legs, the holding frame can be safely supported on the mould and/or the half shell.

According to an embodiment, the first support means are connected to the mould by means of one or more adapters. With regard to the definition of the mould above, the one or more adapters are connected to the shape-giving structure or any supporting structure of the mould. Herein, an adapter defines an intermediate piece which provides a mechanical connection between the holding frame and the mould for the half shell. In case the first support means comprises several support legs, there correspondingly are several adapters, each adapter for one support leg. With an adapter, the holding frame can be easily adapted to different moulds. Alternatively, the first support means are designed to be directly connected to the mould.

According to an embodiment, the one or more adapters are designed in such a way that a position of the first support means and thus of the holding frame relative to the mould is adjustable. For example, the adapters are configured to adjust a position of the holding frame with respect to the mould in a first direction, e.g. a Z-direction or a direction of gravity. In other embodiments, the adapters are configured to adjust the holding frame with respect to the mould in a second direction and/or third direction. For example, the second direction is a Y-direction corresponding to a direction transverse to the longitudinal direction of the half shell. This contributes to the above-mentioned advantage of enabling a high level of versatility.

According to an embodiment, the trimming tool is operable from inside the half shell. In other words, the trimming tool is accessible to a worker from inside the half shell in the intended operational state. Optionally, there is a protector on an outer side of the trimming tool, e.g. at a side facing away from the worker inside the half shell. Optionally, there is a further protector on the inner side of the trimming tool, e.g. at a side facing towards the worker inside the half shell. Such protectors contribute to a high level of health and safety at work.

According to an embodiment, the holding frame comprises a working platform for operating the trimming tool, wherein the working platform is arranged inside the half shell. The platform is a footboard or standing surface for a worker to supervise the trimming process and to operate the trimming tool.

According to an embodiment, the working platform is designed to be foldable. This facilitates transportation of the device by folding the working platform, e.g. into a storage position. Further, in the intended operational state of the device, i.e. when placed over the longitudinal edge of the half shell in the mould, the working platform can be folded away so that there is more space inside the half shell, for example for other work when trimming is not in progress. For example, the working platform is pivotably connected to the holding frame.

According to an embodiment, folding of the working platform is limited between a first position and a second position, wherein the first position corresponds to a transport position in which the working platform is folded against the holding frame, and wherein the second position corresponds to a use position in which the working platform is folded away from the holding frame into a horizontal position. The limitation of the folding, for example, is achieved by one or more mechanical abutments.

According to an embodiment, the working platform can be detachably locked to the holding frame in a folded state. "Detachably locked" means that the platform, being used as intended, does not come loose when locked, but can be released from its locked position by an unlocking process. Thus, the platform can be locked for transportation of the device, e.g. from one half shell to another half shell.

Likewise, the working platform can also be locked in the folded-out state, in order to ensure a stable and fixed horizontal position for a worker to stand on.

According to an embodiment, the working platform comprises the second support means and/or a further support means, in particular one or more further support legs, for supporting in the half shell. Thus, the holding frame is supported at least partly within the half shell via the working platform.

According to an embodiment, the working platform comprises one or more support legs which can be folded out. This enables the above-mentioned functions and advantages.

According to an embodiment, the rail has a straight path. With such rail, a straight trimming path along the longitudinal edge is provided. For example, such straight path corresponds to a root region of the half shell, which runs straight.

According to an embodiment, the rail has an arcuate path at least in a section. With such rail, the trimming path is at least partially curved and thus adapts to a root region, in which a chord length of the half shell increases in a direction towards the tip of the half shell. In an alternative solution, two or more of the disclosed devices can be arranged next to each other along the longitudinal edge. The devices may comprise rails with a different path. The two or more devices are connected to each other such that the rails merge seamlessly into one another. Thus, the rails of the one or more devices together adapt to the specific path of the longitudinal edge. These embodiments contribute to the versatility of the disclosed device.

According to an embodiment, the holding frame has one or more anchor points for transportation by means of a crane. An anchor point may be designed as an eyelet. This allows for an easy transportation of the device, e.g. via a crane.

According to a second aspect, a system for trimming a longitudinal edge of a half shell in a root region of a wind turbine rotor blade is disclosed. The system comprises a mould and a half shell prefabricated and arranged in the mould. The system comprises a device according to the first aspect. The holding frame of the device is arranged such that the holding frame is fixed to the mould by means of the first support means. Further, the holding frame is supported in the half shell by means of the second support means. Further, the holding frame extends around a longitudinal edge in a root region of the half shell.

The system enables the above-mentioned functions and advantages. The above-described embodiments with respect to the first aspect analogously apply to the wind turbine rotor blade and vice versa.

Further advantages, features and functions, which are explained in connection with the figures, are given in the following exemplary embodiment of the invention. Identical, similar or similarly acting elements are provided with the same reference signs in the figures.

In the figures:
Figure 1 shows a schematic view of a wind turbine,
Figure 2 shows a schematic view of a wind turbine rotor blade,
Figure 3 shows a half shell of the wind turbine rotor blade,
Figure 4 shows a mould for manufacturing a half shell of a wind turbine rotor blade,
Figure 5 shows a device according to an embodiment of the invention,
Figure 6 shows the device in an intended operational state,
Figures 7 and 8 show details of the device, and
Figures 9 and 10 show an arrangement of devices according to another embodiment of the invention.

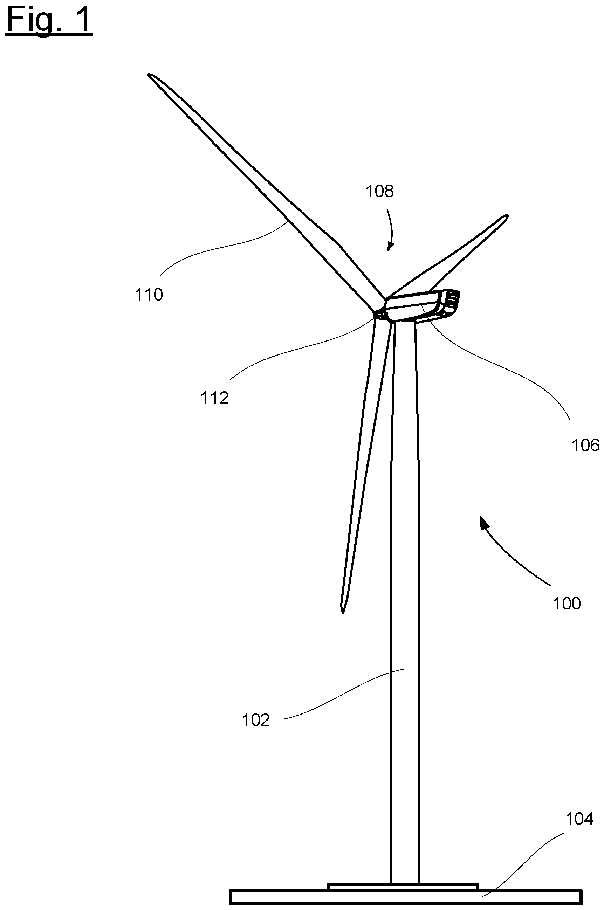

Figure 1 shows a schematic view of a wind turbine 100, which comprises a tower 102. The tower 102 is fixed to the ground by means of a foundation 104. At one end of the tower 102 opposite to the ground a nacelle 106 is rotatably mounted. The nacelle 106, for example, comprises a generator which is coupled to a rotor 108 via a rotor shaft (not shown). The rotor 108 comprises one or more (wind turbine) rotor blades 110, which are arranged on a rotor hub 112.

During operation, the rotor 108 is set in rotation by an air flow. This rotational movement is transmitted to the generator via the rotor shaft and, if necessary, a gearbox. The generator converts the mechanical energy of the rotor 108 into electrical energy.

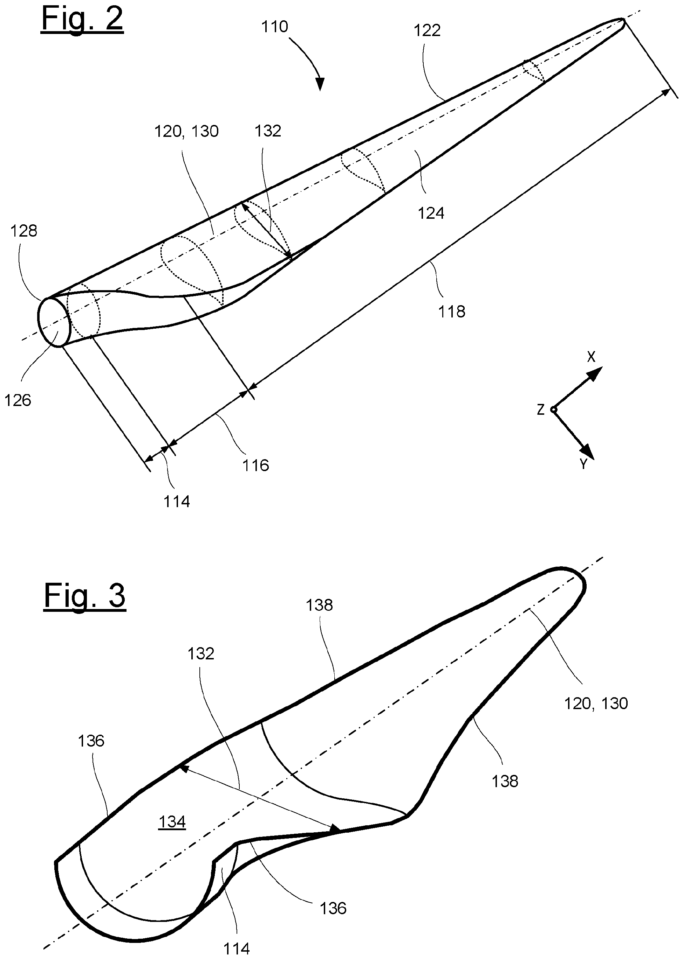

Figure 2 shows an exemplary rotor blade 110. The rotor blade 110 has the shape of a conventional rotor blade and has a rotor blade root region 114 facing the rotor hub 112. The rotor blade root region 114 typically has an essentially circular cross-section. The rotor blade root region 114 is followed by a transition area 116 and a profile area 118 of the rotor blade 110. The rotor blade 110 has a pressure side 122 and an opposite suction side 124 with respect to a longitudinal direction 120 (also main extension direction). The rotor blade 110 is essentially hollow inside. The longitudinal direction 120 can also be seen as spanwise direction 130 (X-direction), which runs orthogonal to the so-called chordwise direction 132 (Y-direction) as indicated in figure 2. The chordwise direction 132 can also be named transverse direction in the context of this writing. Reference is made to the coordinate system shown in Figure 2.

In the rotor blade root region 114 a rotor blade root end 126 with a flange 128 is provided, by means of which the rotor blade 110 can be mechanically connected to a pitch bearing or an extender.

Figure 3 exemplarily shows one half shell 134 of a wind turbine rotor blade 110. As already indicated, a rotor blade 110 is made of typically two half shells 134, which are placed on top of each other and bonded together along the two longitudinal edges 138 of each half shell 134. The opposing longitudinal edges 138 of each half shell 134 form bonding flanges 136 at least in a region close to the root, and comprise a flat, defined bonding surface.

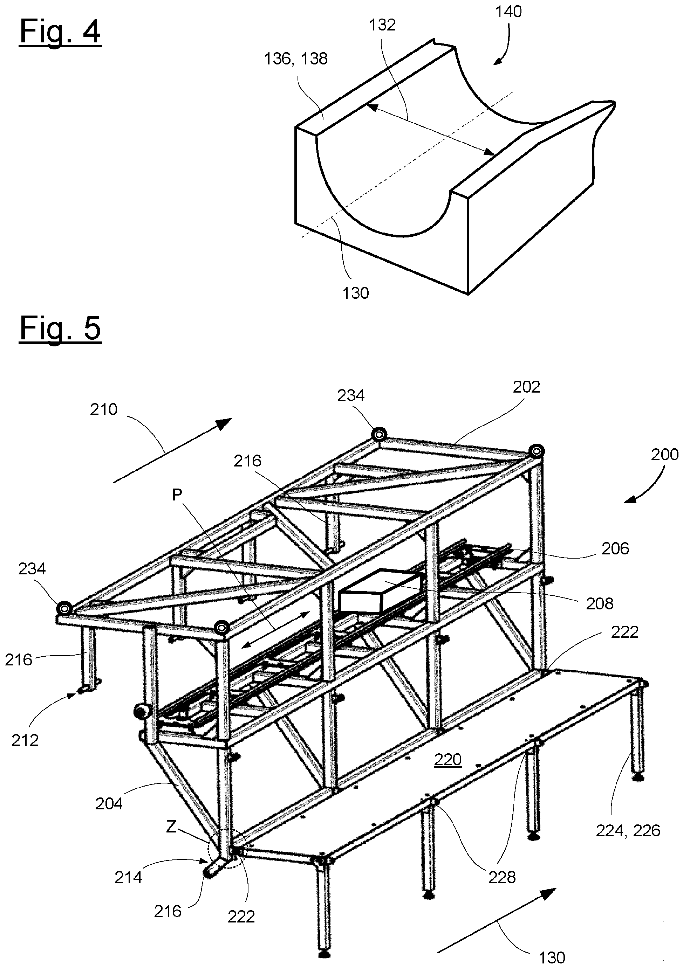

A half shell 134 is formed by laying a plurality of reinforcing materials such as fabric layers, e.g. glass fiber fabrics, into a mould 140, as exemplarily shown in figure 4 (only a portion of the mould 140 is illustrated referring to the root region 114 of the rotor blade 110). As can be seen in figure 4, the mould 140 is a concavely shaped mould. Later, the fabric layers are infused with resin and cured to form the final, half shell 134.

A such formed half shell 134 can be seen as a prefabricated component, which undergoes one or more finishing process, like the above-mentioned trimming of the bonding flanges 136.

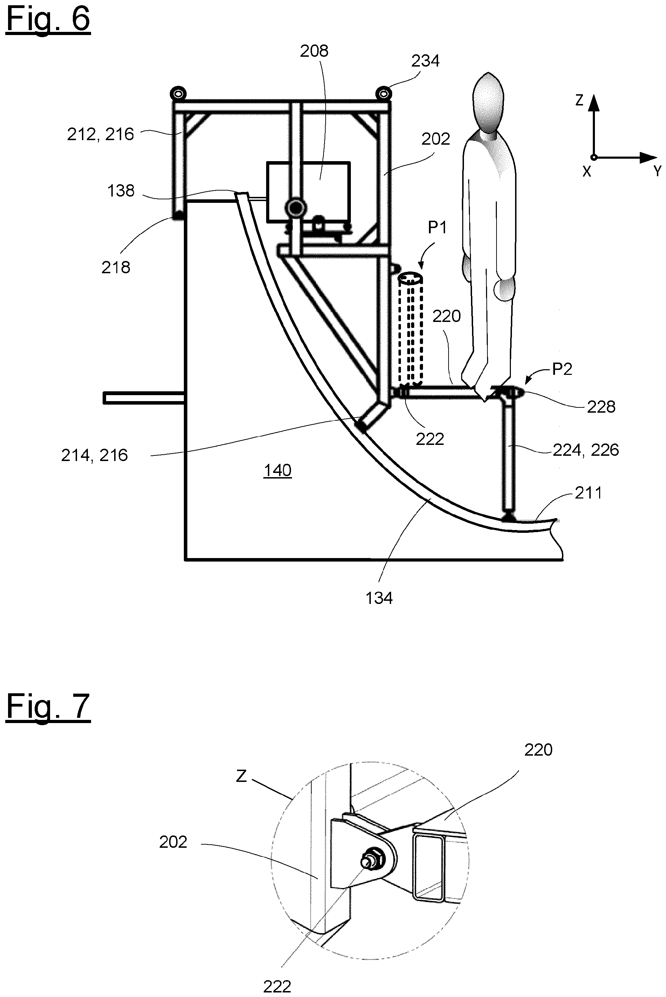

Figure 5 shows a device 200 according to an embodiment of the invention. The device 200 is configured to trim one longitudinal edge 138 and is described in more detail below. Figure 6 shows a system 300 with the device 200, the mould 140 and a cured half shell 134 placed in the mould 140.

The device 200 comprises a holding frame 202. The holding frame 202 is a stiff structure being formed by a plurality of interconnected webs 204. The holding frame 202 is preferably made of metal. The holding frame 202 has a rail 206. The device 200 further has a trimming tool 208, which, in the present embodiment, is a saw. The trimming tool 208 is displaceably guided on the rail 206 of the holding frame 202. Thus, the rail 206 serves as a guiding mechanism for the trimming tool 208. At least, the trimming tool 208 can be slid along a trimming direction 210, which - in an operating state of the device 200 - corresponds to the longitudinal direction 120 (spanwise direction 130) of the rotor blade 110 or the longitudinal edge 138, respectively. The trimming tool 208 can be manually moved along the rail 206 or driven by a motor (not shown).

Regarding figure 6, the device 200 is installed in its intended operation state for trimming one longitudinal edge 138. The device 200 extends along the X-direction (spanwise direction 130, see coordinate system). Further, the device 200 extends in the Y-direction (chordwise direction 132) from within the half shell 134, e.g. a bottom 211 or a middle of the half shell 134, towards only one longitudinal edge 138. The holding frame 202 is designed such that it covers or extends around the one longitudinal edge 138.

The holding frame 202 has a first support means 212 and a second support means 214. Both, the first and the second support means 212, 214 comprise support legs 216. The support legs 216 are integrally formed with the holding frame 202.

The first support means 212 supports the holding frame 202 (and thus the device 200) outside the half shell 134 on the mould 140. In this regard, each support leg 216 of the first support means 212 is connected to the mould 140 by an adapter 218. The adapters 218 are designed in such a way that a position of the first support means 212 and thus of the holding frame 202 relative to the mould 140 is adjustable. In the present example, the adapters 218 allow to adjust position of the holding frame 202 and thus the device 200 in X-, Y- and Z-direction relative to the mould 140.

The second support means 214 is designed to support the holding frame 202 on the half shell 134 inside the mould 140. The support legs 216 of the second support means 214 therefore stand on the half shell 134.

From the above description and regarding figures 5 and 6 it is clear that the device 200 is designed for trimming only one longitudinal edge 138, and not both opposing longitudinal edges 138. In other words, the device 200 is provided for only one side of the half shell 134. The device 200 can be perfectly positioned for trimming and - even more - adapted to different and specific mould- and half shell-designs, in particular due to the adapters 218 and the one-side design.

The described device 200 allows that the trimming tool 208 is operable from inside the half shell 134 which has advantages in terms of health and safety features for a worker or operator of the trimming tool 208. More precisely, the trimming tool 208, i.e. the saw in the present example, trims, i.e. saws, the longitudinal edge 138 from inside the half shell 134. In other words, the saw points outwards so that the worker is facing away from the saw and therefore the dangerous sawing area. Of course, measures for sucking dust and other particles can be provided (not shown).

For a worker to use the trimming tool 208, the holding frame 202 comprises a working platform 220. The worker can stand on the working platform 220 and operate the trimming tool 208, e.g. moving the trimming tool 208. The working platform 220 is arranged inside the half shell 134. The working platform 220 is foldable. Therefore, the working platform 220 is hingeably connected to the holding frame 202 by one or more hinges 222. Figure 7 shows the detailed view Z (see figure 5), in which a hinge 222 can be seen. The working platform 220 has some further support means 224, here further support legs 226. These further support legs 226 support the device 200 in the half shell 134. The further support legs 226 are foldable, too, via respective further hinges 228.

For folding, the working platform 220 itself can be pivoted between two positions. The first position P1 corresponds to a transport position in which the working platform 220 is folded against the holding frame 202. In the first position P1, the further support legs 226 are folded against the working platform 220. The first position P1 is indicated by dotted lines in figure 6. With the first position P1, the device 200 is in a compact form and facilitates transportation. The second position P2 is indicated by solid lines in figure 6 and corresponds to a use position in which the working platform 220 is folded away from the holding frame 202. The movement between the two positions may be mechanically limited, e.g. by one or more abutment elements.

Both the working platform 220 and the further support legs 226 are pivoted around axes which essentially run parallel to the X-direction, wherein for switching between the two positions P1 and P2, the working platform 220 is pivoted counterclockwise compared to the further support legs 226.

In the first position P1, the working platform 220 can be detachably locked to the holding frame 202 in the folded state for a safe transport of the device 200. A locking mechanism 230 is provided at the holding from 202 to detachably secure the working platform 220 at the holding frame 202. Here, the locking mechanism comprises a locking bolt 232.

For transportation of the device 200, e.g. from a storing position into a half shell 134 for trimming (as shown in figure 6), a crane is used. For this purpose, the holding frame 202 has one or more anchor points 234 for transportation by means of a crane.

As can be seen from figures 5 and 6, the rail 206 has a straight path P (also trimming path). Such rail 206 is particularly advantageous for longitudinal edges 136 that run straight.

In a non-shown embodiment, the rail 206 has an arcuate path at least in a section of the entire rail 206. This allows to trim a longitudinal edge 138 which has a curved course.

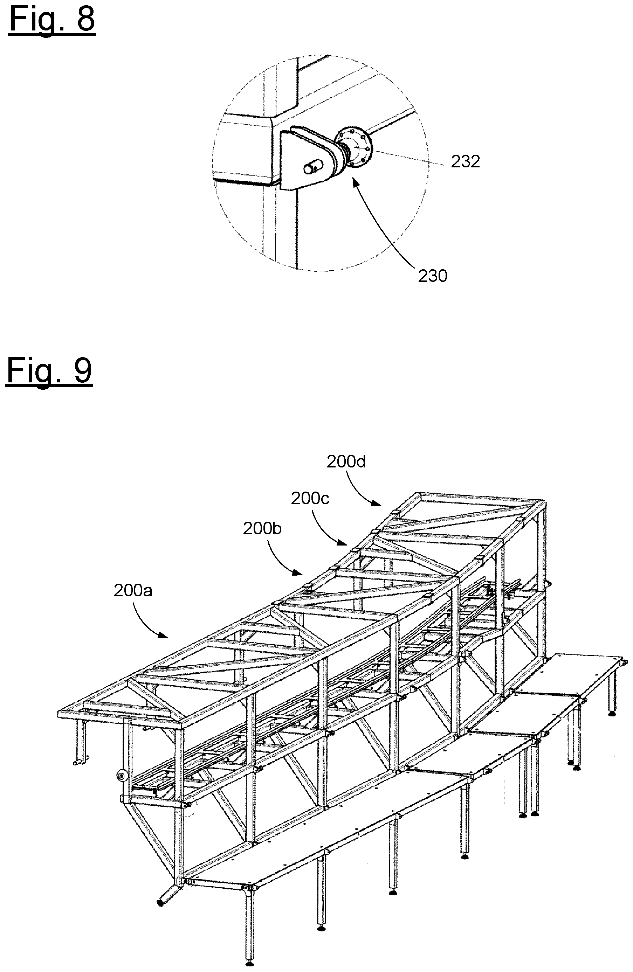

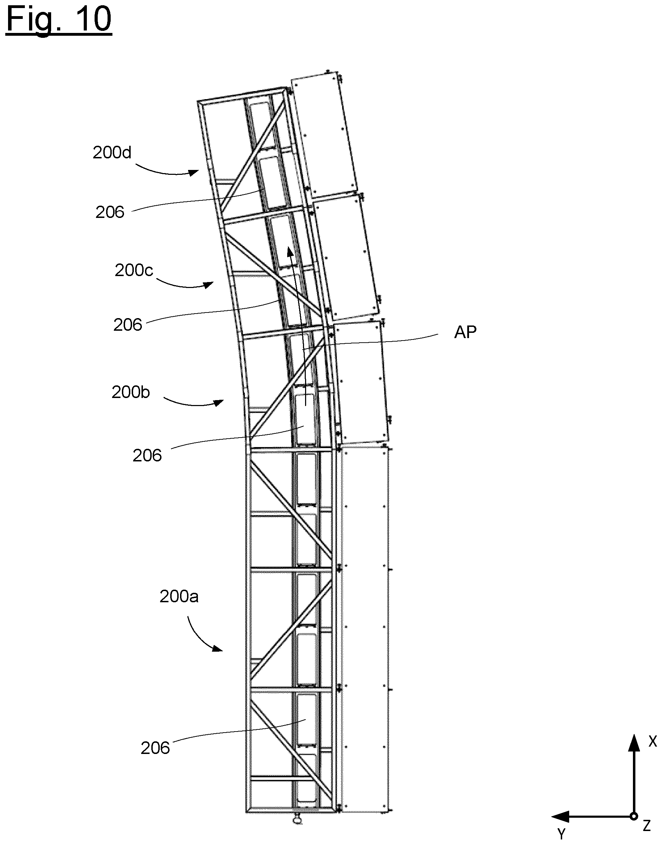

Regarding figures 9 and 10, another embodiment of the invention is shown, wherein an arrangement of above-described devices 200 is shown. The arrangement comprises four devices 200, namely 200a to 200d. The devices 200a to 200d correspond to the above-described device and differ - in the present embodiment - with regard to its length along the X-direction. Slight further adaptions may be made, e.g. more or less hinges 222 depending on the length of the respective device 200a to 200d, however these adaptions are within the knowledge of the person skilled in the art and are therefore not described in more detail.

The devices 200a to 200d are placed next to each other to form a common device for trimming a longitudinal edge 138. The devices 200a to 200d can be interconnected to each other or placed directly adjacent to each other without mechanical connection. Therefore, the devices 200a to 200d are arranged in a row, wherein their rails 206 define a common path which is adapted to a respective longitudinal edge 138. By providing several devices 200a to 200d, a high degree of flexibility and modularity can be achieved, allowing the longitudinal edges 138 of many different half shells 134 to be trimmed. It is noted here, that the device 200b exemplarily comprises a rail 206 with an arcuate path AP.

Of course, in other embodiments more or less devices 200 can be used. Further, other devices 200 with different lengths etc. can be provided, without departing from the scope of the present inventive embodiments.

### Reference signs

- 100: wind turbine
- 102: tower
- 104: foundation
- 106: nacelle
- 108: rotor
- 110: rotor blade
- 112: rotor hub
- 114: rotor blade root region
- 116: transition region
- 118: profile region
- 120: longitudinal direction
- 122: pressure side
- 124: suction side
- 126: rotor blade root end
- 128: flange
- 130: spanwise direction
- 132: chordwise direction
- 134: half shell
- 136: bonding flange
- 138: longitudinal edge
- 140: mould

- 200: device
- 200a-d: device
- 202: holding frame
- 204: web
- 206: rail
- 208: trimming tool
- 210: trimming direction
- 211: bottom
- 212: first support means
- 214: second support means
- 216: support legs
- 218: adapter
- 220: working platform
- 222: hinge
- 224: further support means
- 226: further support legs
- 228: further hinge
- 230: locking mechanism
- 232: locking bolt
- 234: anchor point

- 300: system

- P: path
- AP: arcuate path
- P1: first position
- P2: second position

## Claims

1. Device (200) for trimming a longitudinal edge (138) of a half shell (134) in a root region (114) of a wind turbine rotor blade (110), the half shell (134) being placed in a mould (140), the device (200) comprising
- a holding frame (202), the holding frame (202) having a rail (206), a first support means (212) and a second support means (214), and
- a trimming tool (208) which is displaceably guided on the rail (206) of the holding frame (202),
wherein
- the holding frame (202) is designed in such a way that it extends over the longitudinal edge (138) for trimming,
- the first support means (212) is designed to support the holding frame (202) outside the half shell (134) on the mould (140), and
- the second support means (214) is designed to support the holding frame (202) on the half shell (134) inside the mould (140) .

2. Device (200) according to claim 1, wherein the first support means (212) and/or the second support means (214) comprises one or more support legs (216), which one or more support legs (216) are arranged on the holding frame (202) or are an integral part of the holding frame (202).

3. Device (200) according to claim 1 or 2, wherein the first support means (212) are connected to the mould (140) by means of one or more adapters (218).

4. Device (200) according to claim 3, wherein the one or more adapters (218) are designed in such a way that a position of the first support means (212) and thus of the holding frame (202) relative to the mould (140) is adjustable.

5. Device (200) according to one of the preceding claims, wherein the trimming tool (208) is operable from inside the half shell (134).

6. Device (200) according to one of the preceding claims, wherein the holding frame (202) comprises a working platform (220) for operating the trimming tool (208), wherein the working platform (220) is arranged inside the half shell (134) .

7. Device (200) according to claim 6, wherein the working platform (220) is designed to be foldable.

8. Device (200) according to claim 7, wherein folding of the working platform (220) is limited between a first position (P1) and a second position (P2), wherein the first position (P1) corresponds to a transport position in which the working platform (220) is folded against the holding frame (202), and wherein the second position (P2) corresponds to a use position in which the working platform (220) is folded away from the holding frame (202).

9. Device (200) according to claim 7 or 8, wherein the working platform (220) can be detachably locked to the holding frame (202) in a folded state.

10. Device (200) according to any one of claims 6 to 9, wherein the working platform (220) comprises the second support means (214) and/or a further support means (224), in particular one or more further support legs (226), for supporting in the half shell (134).

11. Device (200) according to claim 10, wherein the working platform (220) comprises one or more support legs (226) which can be folded out.

12. Device (200) according to one of the preceding claims, wherein the rail (206) has a straight path (P).

13. Device (200) according to one of claims 1 to 11, wherein the rail (206) has an arcuate path (AP) at least in a section.

14. Device (200) according to one of the preceding claims, wherein the holding frame (202) has one or more anchor points (234) for transportation by means of a crane.

15. System (300) for trimming a longitudinal edge of a half shell in a root region of a wind turbine rotor blade (110), the system (300) comprising
- a mould (140),
- a half shell (134) prefabricated and arranged in the mould (140), and
- a device (200) according to one of the preceding claims, wherein the holding frame (202) is arranged such that
- the holding frame (202) is fixed to the mould (140) by means of the first support means (212),
- the holding frame (202) is supported in the half shell (134) by means of the second support means (214), and
- the holding frame (202) extends over a longitudinal edge (138) in a root region (114) of the half shell (134).
